# EUROPEAN PATENT SPECIFICATION

(11) **EP 1 257 717 B1**
(45) Date of publication and mention of the grant of the patent: **23.03.2005**
(21) Application number: 01953020.3
(22) Date of filing: 26.01.2001
(51) Int. Cl.: E04B 1/94, E06B 5/16

(54) **FLEXIBLE SEAL**
FLEXIBLE ABDICHTUNG
JOINT D'ETANCHEITE FLEXIBLE

(30) Priority: 18.02.2000 GB 0003672
(43) Date of publication of application: 20.11.2002
(73) Proprietor: ENVIRONMENTAL SEALS LIMITED, Nr. Dover, Kent CT15 7JG (GB)
(72) Inventor: WARD, Derek Alfred, Maydensole Kent CT15 5HR (GB)
(74) Representative: Fry, Alan Valentine
(86) International application number: PCT/GB2001/000323
(87) International publication number: WO 2001/061119

(56) References cited:
- EP-A- 0 653 457
- US-A- 5 968 615

## Description

This invention relates to preformed flexible expandable seals of foam or sponge.

Flexible expandable seals are used, for example, as movement joints between external and internal walls of buildings, between partitions and in roofing sections and concrete ceilings to provide *inter alia* fire-retardant properties.

Such a seal is disclosed in US-A-5 968 615.

Flexible expandable seals are known which comprise a preformed flexible cellular foam or sponge which has been impregnated with fire-retardant material. When subjected to temperatures of the order of 300-400°C such seals lose integrity thereby allowing flames to pass between the walls or other members between which the seal is positioned. Expandable seals are also known which comprise layers of sponge and intumescent sheets. The sponge content of these seals deteriorates at temperatures around 200°C while the sheets expand. Seal flexibility is therefore substantially lost.

The present invention sets out to provide a flexible expandable fire-retardant seal which does not suffer from, or at least alleviates, many of the disadvantages to be found with existing seals.

According to the present invention in one aspect, there is provided a flexible expandable seal which comprises a preformed flexible cellular fire-retardant foam or sponge at least one of whose surfaces is coated firstly with a primer solution including a sealant and secondly with a flowable coating of a fire-retardant material, the primer solution operating to close the open pores of the said at least one surface and to provide a bond to which the fire-retardant coating can adhere.

All surfaces of the foam or sponge may be coated.

The primer solution may comprise an aqueous solution of an acrylic copolymer which includes ammonium polyphosphate.

The fire-retardant coating may comprise a chlorinated vinyl copolymer system which includes a quantity of ammonium polyphosphate, zinc borate and/or magnesium and/or calcium carbonates.

The foam or sponge may comprise polyurethane or alternatively a silicone coated with a silane primer.

The primer solution may be allowed to dry before the fire-retardant material is applied. One or both coatings may be applied by brushing, rolling or spraying.

In another aspect, the invention provides a flexible expandable seal which comprises a pre-formed flexible cellular fire-retardant foam or sponge whose surfaces are coated sequentially with coatings of a primer solution including a sealant and a fire-retardant material.

In one example, a block of polyurethane foam material impregnated with an aqueous solution of a fire-retardant material is coated on all of its surfaces with a solution of an acrylic copolymer system which includes ammonium polyphosphate. At temperatures in excess of 250°C to 300°C the ammonium polyphosphate forms phosphoric acid which reacts with the fire-retardant coating for the polyurethane block. This primer coating has a viscosity similar to that of water and acts to seal the open cells of the polyurethane foam. The primer coating therefore seals the exposed surfaces of the polyurethane block whilst retaining the flexibility characteristics of the block. The primer coating also provides a bond to which the subsequently applied fire retardant coating can adhere.

The surfaces of the polyurethane block are then coated with one or more coatings of a chlorinated vinyl copolymer system which includes a quantity of ammonium polyphosphate, zinc borate and/or magnesium and/or calcium carbonates. The viscosity of this fire-retardant coating is more akin to an emulsion or paste.

The coatings may be applied by means of a brush, roller or spray. The primer coating not only seals the open pores of the polyurethane block but also, as mentioned previously, provides a primed surface to which the fire-retardant coating can adhere. The coated block retains its flexibility and the bond between the respective coatings is sufficient to prevent cracking or other damage to the surface during handling of the block.

In some instances it may be preferable to allow the primer coating to dry before the fire-retardant coating is applied.

It will be appreciated that the foregoing is merely exemplary of fire-retardant seals in accordance with the invention and that various modifications can readily be made thereto without departing from the true scope of the claims.

## Claims

1. A flexible expandable seal which comprises a pre-formed flexible cellular fire-retardant foam or sponge whose surfaces are coated sequentially with coatings, **characterized in that** the sequential coatings are a) a primer solution including a sealant and b) a fire-retardant material.

2. A flexible expandable seal which comprises a preformed flexible cellular fire-retardant foam or sponge at least one of whose surfaces is coated firstly with a primer solution including a sealant and secondly with a flowable coating of a fire-retardant material, the primer solution operating to close the open pores of the said at least one surface and to provide a bond to which the fire-retardant coating can adhere.

3. A seal as claimed in claim 2 wherein all surfaces of the foam or sponge are coated.

4. A seal as claimed in claim 2 or claim 3 wherein the primer solution comprises an aqueous solution of an acrylic copolymer which includes ammonium polyphosphate.

5. A seal as claimed in any one of the preceding claims 2 to 4 wherein the fire-retardant coating comprises a chlorinated vinyl copolymer system which includes a quantity of ammonium polyphosphate, zinc borate and/or magnesium and/or calcium carbonates.

6. A seal as claimed in any one of the preceding claims 2 to 5 wherein the foam or sponge comprises polyurethane.

7. A seal as claimed in any one of claims 2 to 5 wherein the foam or sponge comprises a silicone coated with a silane primer.

## Patentansprüche

1. Dehnbare, flexible Abdichtung, die aus einem vorgeformten flexiblen, zellenförmigen, feuerhemmenden Schaum oder Schwamm besteht, deren Oberflächen aufeinanderfolgend mit Überzügen versehen sind,
**dadurch gekennzeichnet, dass** die aufeinanderfolgenden Überzüge die folgenden sind: a) eine Grundierungslösung mit einem Dichtmittel und b) ein feuerhemmendes Material.

2. Dehnbare, flexible Abdichtung, bestehend aus einem vorgeformten flexiblen, zellenförmigen, feuerhemmenden Schaum oder Schwamm, von denen wenigstens eine der Oberflächen erstens mit einer Grundierungslösung, die ein Dichtmittel enthält und zweitens mit einem fließfähigen Überzug aus einem feuerhemmenden Material überzogen ist, wobei die Grundierungslösung ein Schließen der offenen Poren der wenigstens einen Oberfläche bewirkt und einen Verbund bildet, an dem der feuerhemmende Überzug anhaften kann.

3. Abdichtung nach Anspruch 2, bei welcher sämtliche Oberflächen von Schaum oder Schwamm überzogen sind.

4. Abdichtung nach den Ansprüchen 2 oder 3, bei welcher die Grundierungslösung eine wässrige Lösung eines Acryl-Kopolymer ist, das Ammonium-Polyphosphat enthält.

5. Abdichtung nach einem der vorhergehenden Ansprüche 2 bis 4, bei welcher der feuerhemmende Überzug aus einem chlorierten Vinyl-Kopolymer-System besteht, der einen Anteil von Ammonium-Polyphosphat, Zinkborat und/oder Magnesiumkarbonat und/oder Kalziumkarbonat aufweist.

6. Abdichtung nach einem der vorhergehenden Ansprüche 2 bis 5, bei welcher der Schaum oder der Schwamm aus Polyurethan besteht.

7. Abdichtung nach einem der Ansprüche 2 bis 5, bei welcher der Schaum oder der Schwamm aus Silikon besteht und mit einer Silan-Grundierung überzogen ist.

## Revendications

1. Joint expansible flexible qui comprend une mousse ou éponge ignifuge à structure cellulaire flexible préformée dont les surfaces sont enduites de manière séquentielle de revêtements **caractérisé en ce que** ces revêtements appliqués de manière séquentielle sont a) une couche de fond comportant une matière d'étanchéité et b) une matière ignifuge.

2. Joint d'étanchéité expansible flexible qui comprend une mousse ou éponge ignifuge à structure cellulaire flexible préformée dont au moins une des surfaces est enduite d'abord d'une solution de couche de fond comprenant un matériau d'étanchéité et deuxièmement d'une couche fluidifiable d'une matière ignifuge, la solution de couche de fond fonctionnant pour fermer les pores ouverts de cette au moins une surface et pour créer une couche de liaison à laquelle le revêtement ignifuge peut adhérer.

3. Joint selon la revendication 2 où toutes les surfaces de la mousse ou éponge sont enduites.

4. Joint selon la revendication 2 ou la revendication 3 où la couche de fond comprend une solution aqueuse d'un copolymère acrylique qui comporte du polyphosphate d'ammonium.

5. Joint selon l'une quelconque des revendications précédentes 2 à 4 où l'enduit ignifuge comprend un système copolymère vinylique chloré qui comprend une quantité de polyphosphate d'ammonium, de borate de zinc et/ou de carbonate de magnésium et/ou de carbonate de calcium.

6. Joint selon l'une quelconque des revendications précédentes 2 à 5 où la mousse ou éponge comprennent du polyuréthane.

7. Joint selon l'une quelconque des revendications précédentes 2 à 5 où la mousse ou éponge comprennent un silicone enduit d'une couche de fond en silane.
